# EUROPEAN PATENT APPLICATION

(11) **EP 2 169 570 A1**
(43) Date of publication of application: **31.03.2010**
(21) Application number: 09171356.0
(22) Date of filing: 25.09.2009
(51) Int. Cl.: G06F 17/30, H04L 29/08, H04N 7/173

(54) **Mobile sites detection and handling**

(30) Priority: 25.09.2008 US 99933 P
(71) Applicant: Infogin LTD, 44643 Kfar Saba (IL)
(72) Inventor: Wyler, Eran S., Modi'in 71700 (IL); Elrom, Ron, Ra'anana 43592 (IL); Ilani, Gil, Tel Aviv 69341 (IL); Shefi, Naaman, Tzoran 42823 (IL); Rosen, Eyal, Ruet 71908 (IL); Briner, Gal, Petah Tivka 49280 (IL); Mashbach, Oded, Kfar Saba 44643 (IL)
(74) Representative: Evens, Paul Jonathan

(57) **Abstract**

Apparatus and method for providing content to a user including a request processing module (302) operative to receive a request for content, from a user operating a non-desktop browser, and to communicate the request to a server (304) hosting the content, a content classification module (306), operative to receive the content from the server hosting the content and to ascertain whether or not the content is already suitable for display on a non-desktop browser based on at least one characteristic of the content and a content adaptation module (308), operative to receive a classification output from the content classification module and to adapt the content which is not already suitable for display on the non-desktop browser to be suitable for display on the non-desktop browser.

## Description

### REFERENCE TO RELATED APPLICATIONS

Reference is made to U.S. Provisional Patent Application No. 61/099,933, entitled MOBILE SITES DETECTION AND HANDLING, filed September 25, 2008, the disclosure of which is hereby incorporated by reference and priority of which is hereby claimed pursuant to 37 CFR 1.78(a) (4) and (5)(i).

Reference is further made to Applicant's co-pending U.S. Patent applications, the disclosures of which are hereby incorporated by reference:
U.S. Patent Application Publication No. 2008/0010335 entitled METHOD AND APPARATUS FOR ANALYZING, PROCESSING AND FORMATTING NETWORK INFORMATION SUCH AS WEB-PAGES, filed January 23, 2006;
U.S. Patent Application Publication No. 2008/0016462 entitled METHODS AND APPARATUS FOR ENABLING USE OF WEB CONTENT ON VARIOUS TYPES OF DEVICES, filed March 1, 2007;
U.S. Patent Application Publication No. 2008/0153467 entitled METHODS AND APPARATUS FOR ENABLING USE OF WEB CONTENT ON VARIOUS TYPES OF DEVICES, filed March 1, 2007;
U.S. Patent Application Publication No. 2007/0206221 entitled METHODS AND APPARATUS FOR ENABLING USE OF WEB CONTENT ON VARIOUS TYPES OF DEVICES, filed March 1, 2007;
U.S. Patent Application No. 11/713,588 entitled METHODS AND APPARATUS FOR ENABLING USE OF WEB CONTENT ON VARIOUS TYPES OF DEVICES, filed March 1, 2007;
U.S. Patent Application No. 11/713,583 entitled METHODS AND APPARATUS FOR ENABLING USE OF WEB CONTENT ON VARIOUS TYPES OF DEVICES, filed March 1,2007;
U.S. Patent Application No. 11/713,584 entitled METHODS AND APPARATUS FOR ENABLING USE OF WEB CONTENT ON VARIOUS TYPES OF DEVICES, filed March 1, 2007;
U.S. Patent Application No. 11/713,589 entitled METHODS AND APPARATUS FOR ENABLING USE OF WEB CONTENT ON VARIOUS TYPES OF DEVICES, filed March 1, 2007; and
U.S. Patent Application No. 11/680,140 entitled METHOD AND APPARATUS FOR ANALYZING, PROCESSING AND FORMATTING NETWORK INFORMATION SUCH AS WEB-PAGES, filed October 30, 2007.

### FIELD OF THE INVENTION

The present invention relates to methods and systems for providing content to a non-desktop browser, such as a mobile communicator or Set Top Box (STB).

### BACKGROUND OF THE INVENTION

The following U.S. Patent documents are believed to represent the current state of the art: 7,047,033; 6,199,082; 6,157,935; 6,023,714.

### SUMMARY OF THE INVENTION

The present invention seeks to provide methods and systems for classifying whether or not requested content is already suitable for display on a non-desktop browser, such as a mobile communicator or STB, and, if necessary, for adapting the content for display on the non-desktop browser.

There is thus provided in accordance with a preferred embodiment of the present invention apparatus for providing content to a user including a request processing module operative to receive a request for content, from a user operating a mobile communicator, and to communicate the request to a server hosting the content, a content classification module, operative to receive the content from the server hosting the content and to ascertain whether or not the content is already suitable for display on a mobile communicator based on at least one characteristic of the content, and a content adaptation module, operative to receive a classification output from the content classification module and to adapt the content which is not already suitable for display on the mobile communicator to be suitable for display on the mobile communicator.

There is also provided in accordance with a preferred embodiment of the present invention apparatus for providing content to a user including a request processing module operative to receive a request for content, from a user operating a non-desktop browser, and to communicate the request to a server hosting the content, a content classification module, operative to receive the content from the server hosting the content and to ascertain whether or not the content is already suitable for display on a non-desktop browser based on at least one characteristic of the content and a content adaptation module, operative to receive a classification output from the content classification module and to adapt the content which is not already suitable for display on the non-desktop browser to be suitable for display on the non-desktop browser.

Preferably, the non-desktop browser is embodied in a mobile communicator, a set top box or a terminal.

Preferably, the at least one characteristic includes at least one of a value associated with a content-type header included in the content, a format of a value associated with an x-AspNet-Version header included in the content, at least a portion of a URL associated with the content, a doctype value identified in the content, a value associated with an alternate attribute of a link tag included in the content, a value associated with an attribute of a meta tag included in the content, a declaration of use of flash in an object tag included in the content, at least one of a frame tag, an iframe tag, a frameset tag and an applet tag included in the content, a page size limit associated with the content, an image size limit associated with the content, availability of access keys in the content and existence of nested tables in the content.

Additionally or alternatively, the at least one characteristic is defined by an operator of the content classification module.

In accordance with a preferred embodiment of the present invention, the at least one characteristic includes multiple characteristics, and the content classification module is operative to classify whether or not the content is already suitable for display on at least one mobile communicator or a non-desktop browser by scoring the compliancy of the content with each of the multiple characteristics to obtain multiple characteristic scores, summing the multiple characteristic scores to obtain a sum score and if the sum score is greater than a predetermined threshold value, classifying the content as being adapted for display on at least one mobile communicator or non-desktop browser.

In accordance with a further preferred embodiment of the present invention the content classification module is operative to classify whether or not the content is already suitable for display on at least one mobile communicator or a non-desktop browser, based on the presence of a URL associated with the content in at least one of a mobile communicator compatible URL list and a mobile communicator incompatible URL list.

Preferably, the request processing module is operative to generate a second request, which second request includes identification of the mobile communicator or the non-desktop browser in a user-agent header of the second request, and to communicate the second request to the server hosting the content.

Alternatively, responsive to input provided by the user to the mobile communicator, the request processing module is operative to generate a second request, which second request does not include identification of the mobile communicator or non-desktop browser in a user-agent header of the second request, and to communicate the second request to the server hosting the content.

Preferably, the input provided by the user includes input relating to a single content request.

Alternatively, the input provided by the user includes input relating to multiple content requests.

In accordance with another preferred embodiment of the present invention the content adaptation module is operative to adapt the content for display on the mobile communicator or non-desktop browser in accordance with formatting inputs provided by the user, using the mobile communicator.

Preferably, the formatting inputs include instructions for adapting the content to fit at least one characteristic of the mobile communicator the non-desktop browser operated by the user.

Additionally or alternatively, the formatting inputs comprise instructions for maintaining a layout of the content.

There is further provided in accordance with another preferred embodiment of the present invention a method for providing content to a user, the method including receiving a request for content from a user operating a mobile communicator, communicating the request to a server hosting the content, in response to the request, receiving the content from the server hosting the content, classifying whether or not the content is already suitable for display on at least one mobile communicator based on at least one characteristic of the content, adapting the content which is not already suitable for display on the mobile communicator operated by the user, based on a result of the classifying and communicating the content which is already suitable for display on the mobile communicator or the adapted content to the mobile communicator.

There is further provided in accordance with a preferred embodiment of the present invention a method for providing content to a user, the method including receiving a request for content from a user operating a non-desktop browser, communicating the request to a server hosting the content, in response to the request, receiving the content from the server hosting the content, classifying whether or not the content is already suitable for display on at least one non-desktop browser based on at least one characteristic of the content, adapting the content which is not already suitable for display on the non-desktop browser operated by the user, based on a result of the classifying and communicating the content which is already suitable for display on the non-desktop browser or the adapted content to the non-desktop browser.

Preferably, the at least one characteristic includes at least one of a value associated with a content-type header included in the content, a format of a value associated with an x-AspNet-Version header included in the content, at least a portion of a URL associated with the content, a doctype value identified in the content, a value associated with an alternate attribute of a link tag included in the content, a value associated with an attribute of a meta tag included in the content, a declaration of use of flash in an object tag included in the content, at least one of a frame tag, an iframe tag, a frameset tag and an applet tag included in the content, a page size limit associated with the content, an image size limit associated with the content, availability of access keys in the content and existence of nested tables in the content.

Additionally or alternatively, the method also includes employing operator inputs to define the at least one characteristic.

In accordance with a preferred embodiment of the present invention the at least one characteristic includes multiple characteristics, and classifying includes scoring the compliancy of the content with each of the multiple characteristics to obtain multiple characteristic scores, summing the multiple characteristic scores to obtain a sum score and if the sum score is greater than a predetermined threshold value, classifying the content as being already suitable for display on at least one mobile communicator.

There is further provided in accordance with yet another preferred embodiment of the present invention a method for providing content to a user, the method including receiving a request for content from a user operating a non-desktop browser, communicating the request to a server hosting the content, in response to the request, receiving the content from the server hosting the content, classifying whether or not the content is already suitable for display on at least one non-desktop browser based on at least one characteristic of the content, adapting the content which is not already suitable for display on the non-desktop browser operated by the user, based on a result of the classifying and communicating the content which is already suitable for display on the non-desktop browser or the adapted content to the non-desktop browser.

In accordance with a further preferred embodiment of the present invention the method also includes classifying whether or not the content is already suitable for display on at least one mobile communicator or non-desktop browser based on the presence of a URL associated with the content in at least one of a mobile communicator compatible URL list and a mobile communicator non-desktop browser incompatible URL list.

Preferably, the method also includes prior to the communicating the request, generating a second request, which second request includes identification of the mobile communicator or non-desktop browser in a user-agent header of the second request, and wherein the communicating the request comprises communicating the second request to the server hosting the content.

Alternatively, the method also includes prior to the communicating the request and responsive to input provided by the user, generating a second request, which second request does not include identification of the mobile communicator or in a user-agent header of the second request, and wherein the communicating the request comprises communicating the second request to the server hosting the content.

In accordance with yet a further preferred embodiment of the present invention, the adapting includes adapting the content for display on the mobile communicator non-desktop browser in accordance with formatting inputs provided by the user, using the mobile communicator or non-desktop browser.

Preferably, the adapting includes adapting the content to fit at least one characteristic of the mobile communicator or non-desktop browser operated by the user.

Additionally or alternatively, the adapting includes adapting the content for display on the mobile communicator or non-desktop browser while maintaining a layout of the content.

### BRIEF DESCRIPTION OF THE DRAWINGS

The present invention will be understood and appreciated more fully from the following detailed description, taken in conjunction with the drawings in which:

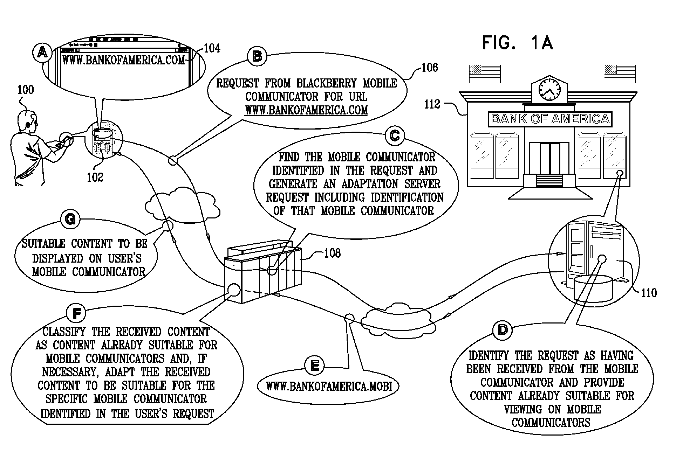

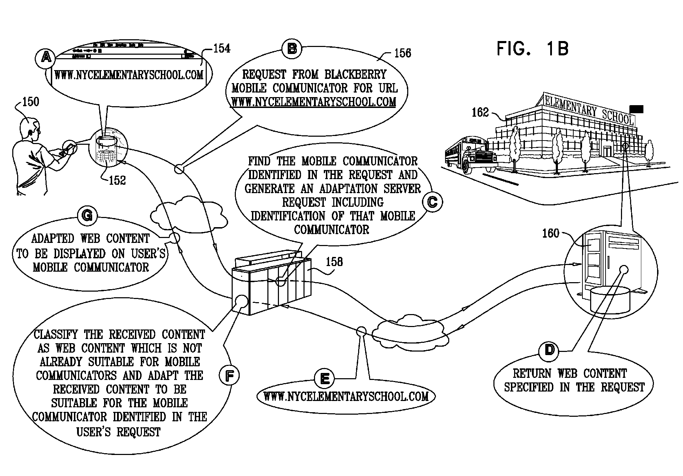

Figs. 1A and 1B are simplified illustrative drawings illustrating a system and method for classifying whether or not requested content is already suitable for display on a mobile communicator requesting the content. In Fig. 1 A, the requested content is suitable for display on the mobile communicator and in Fig. 1B, the requested content is web content and is thus not suitable for display on the mobile communicator and requires adaptation for display on the mobile communicator, in accordance with a preferred embodiment of the present invention;

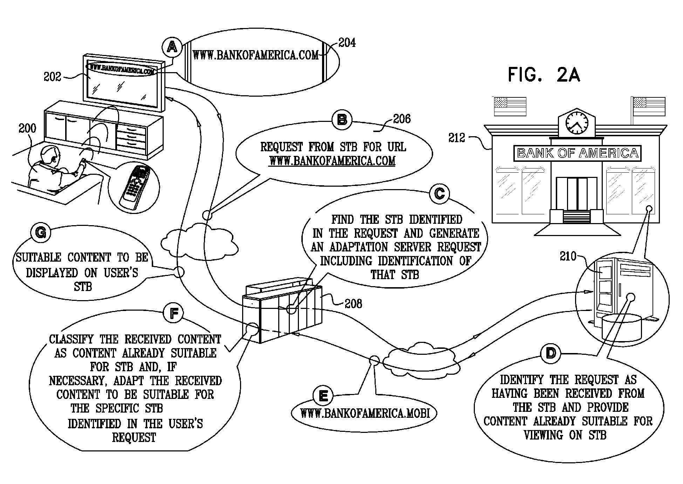

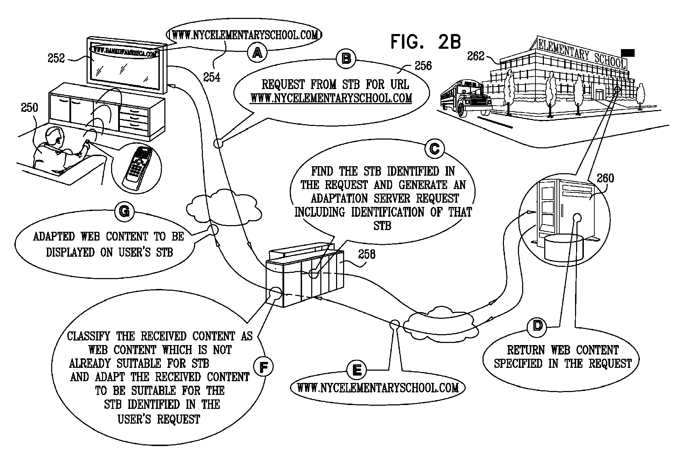

Figs. 2A and 2B are simplified illustrative drawings illustrating a system and method for classifying whether or not requested content is already suitable for display on a STB requesting the content. In Fig. 2A the requested content is suitable for display on the STB and in Fig. 2B, the requested content is web content and is thus not suitable for display on the STB and requires adaptation for display on the STB, in accordance with a preferred embodiment of the present invention;

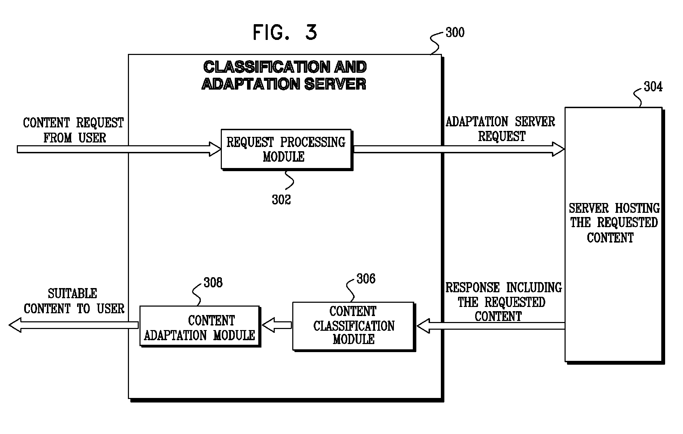

Fig. 3 is a simplified block diagram illustrating apparatus operative to classify whether content is suitable for display on a mobile communicator and to adapt the content to be suitable for display on different types of mobile communicators, constructed and operative in accordance with a preferred embodiment of the present invention; and

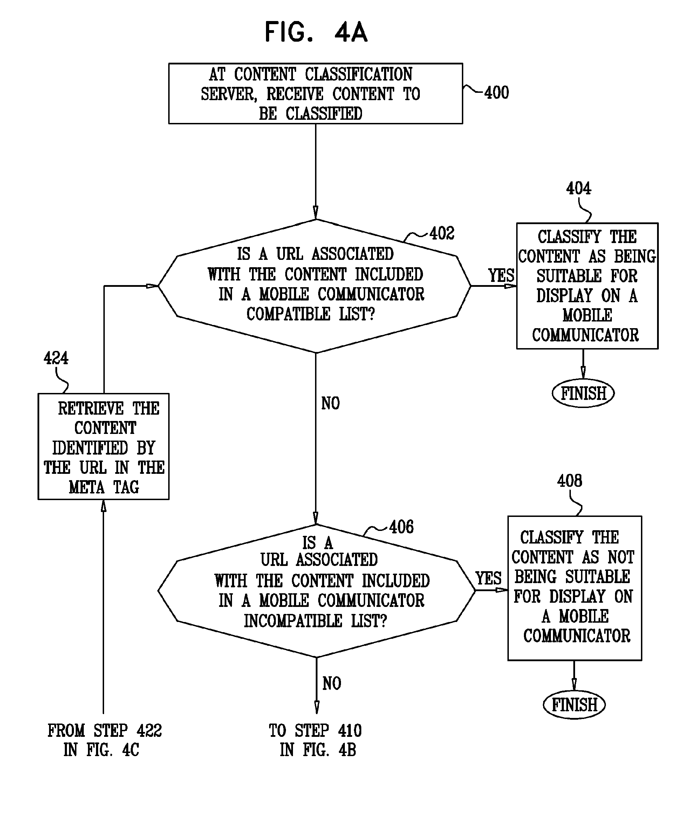

Figs. 4A - 4D, taken together, form a simplified flowchart illustrating methodology for classifying whether or not content is already suitable for display on a mobile communicator, in accordance with a preferred embodiment of the present invention.

### DETAILED DESCRIPTION OF PREFERRED EMBODIMENTS

Reference is now made to Figs. 1A and 1B, which are simplified illustrative drawings illustrating a system and method for classifying whether or not requested content is already suitable for display on a mobile communicator, and, if necessary, for adapting the content for display on the mobile communicator. In Fig. 1A, the requested content is suitable for display on the mobile communicator and in Fig. 1B, the requested content is web content and is thus not suitable for display on the mobile communicator and requires adaptation for display on the mobile communicator, in accordance with a preferred embodiment of the present invention.

As seen in Fig. 1A, a user 100 operating a mobile communicator 102, types a URL 104 such as www.bankofamerica.com in a browser of the mobile communicator 102, as seen at stage A. In the illustrated example, mobile communicator 102 is a BlackBerry® mobile communicator.

As seen at stage B, when the user 100 presses a 'go' or an 'enter' button of the browser, the mobile communicator 102 communicates a request 106 for the content identified by URL 104 to a classification and adaptation server 108. The request 106 is typically communicated from mobile communicator 102 to the server 108 via a communications network such as the Internet. The request 106 typically includes an identification of the type of mobile communicator requesting the content, which identification is typically in a user-agent field of a request header.

As will be described in further detail hereinbelow with respect to Fig. 3 and in accordance with a preferred embodiment of the present invention, the classification and adaptation server 108 comprises a request processing module operative to receive a request, via a communications network, for content from a user operating a mobile communicator. The request processing module is operative to communicate that request, via the communications network, to a server hosting the requested content.

The classification and adaptation server 108 further comprises a content classification module, operative to receive, via the communications network, the content from the server hosting the content and to classify whether or not the content is already suitable for display on mobile communicators. The classification and adaptation server 108 may further ascertain whether or not the content requires adaptation in order to be suitable for display on the specific requesting mobile communicator, based on at least one characteristic of the content.

The classification and adaptation server 108 also includes a content adaptation module, operative to receive a classification output from the content classification module and to adapt the content for display on the mobile communicator operated by the user, if such adaptation is necessary, based on the classification output. The content adaptation module then communicates the suitable content to the mobile communicator via the communications network.

As seen at stage C, when the classification and adaptation server 108 receives the content request 106, it ascertains the type of mobile communicator identified in the user-agent field of the request header. The classification and adaptation server 108 then generates an adaptation server request for the requested content. The user-agent field of the adaptation server request header lists the type of mobile communicator identified in the user-agent field of the original request header as ascertained by the classification and adaptation server 108.

Subsequently, the classification and adaptation server 108 communicates the adaptation server request via a communications network such as the Internet, to a server 110. In the illustrated example, the server hosting the requested content is associated with a bank 112.

As seen at stage D, following receipt of the adaptation server request by the server 110, the server 110 extracts the user-agent field from the header of the adaptation server request in order to ascertain whether the request was received from a mobile communicator. As described hereinabove, the extracted user-agent field identifies the mobile communicator which communicated the request 106. Therefore, the server 110 identifies the request as being received from a mobile communicator, even though server 110 actually received the request from the classification and adaptation server 108.

The server 110 then provides content which is already suitable for display on mobile communicators and may also already be suitable for display on the specific requesting mobile communicator, if available. As seen at stage E, the provided content may have associated therewith a URL, such as www.bankofamerica.mobi, indicating that it is already suitable for display on mobile communicators.

If content suitable for display on mobile communicators is not available, server 110 provides web content to the classification and adaptation server 108.

As seen at stage F, and in accordance with a preferred embodiment of the present invention, when the content is received by the classification and adaptation server 108, the classification and adaptation server 108 classifies the received content as being suitable for display on mobile communicators. The server 108 may also ascertain whether the content requires further adaptation in order to be suitable for display on the specific requesting mobile communicator 102. If such adaptation is necessary, the classification and adaptation server carries it out using any suitable method, such as those described in Applicant's U.S. Patent Application No. 11/680,140 entitled METHOD AND APPARATUS FOR ANALYZING, PROCESSING AND FORMATTING NETWORK INFORMATION SUCH AS WEB-PAGES, filed October 30, 2007, which is hereby incorporated by reference.

Following classification of the content as being suitable for display on mobile communicators, and if necessary, following adaptation thereof, the classification and adaptation server 108 communicates the content to the mobile communicator 102, via a communications network, for display on the mobile communicator 102, as seen at stage G.

It is appreciated that in accordance with an embodiment of the present invention, the user 100 may preset the mobile communicator 102 to provide a preferred page version or display mode per session or per plurality of sessions. For example, the user may instruct the classification and adaptation server 108 not to use the user-agent in the user-agent field provided in the original request. The user may further instruct the server 108 to use a desktop browser user-agent, which would typically result in the receipt of web content unsuitable for display on the mobile communicator 102, and to adapt the received web content to be suitable for display on the mobile communicator 102.

The user may also preset the layout of the adapted web content by providing instructions to the server 108 via the mobile communicator 102. For example, the user may instruct the server 108 to maintain the layout of the original web content in the adapted web content, such that the adapted web content is only optimized for the size of the mobile communicator 102. Alternatively, the user may instruct the server 108 to adapt the web content to be fit and optimized for the specific mobile communicator 102.

Turning to Fig. 1B, it is seen that a user 150 operating a mobile communicator 152, types a URL 154 such as www.nycelementaryschool.com in a browser of the mobile communicator 152, as seen at stage A. In the illustrated example, mobile communicator 152 is a BlackBerry® mobile communicator.

As seen at stage B, when the user 150 presses a 'go' or an 'enter' button of the browser, the mobile communicator 152 communicates a request 156 for the content identified by URL 154, to a classification and adaptation server 158. The request 156 is typically communicated from the mobile communicator 152 to the server 158 via a communications network such as the Internet. The request 156 typically includes an identification of the type of the mobile communicator requesting the content, which identification is typically in a user-agent field of request header.

As seen at stage C, when the classification and adaptation server 158 receives the request 156, it ascertains the type of mobile communicator identified in the user-agent field of the request header. The classification and adaptation server 158 then generates an adaptation server request for the requested content. The user-agent field of the adaptation server request header lists the type of mobile communicator identified in the user-agent field of the original request header as ascertained by the classification and adaptation server 158.

Subsequently, the classification and adaptation server 158 communicates the adaptation server request, via a communications network such as the Internet, to a server 160. In the illustrated example, the server 160 which hosts the requested content is associated with an elementary school 162.

Following receipt of the adaptation server request by the server 160, the server 160 extracts the user-agent field from the header of the adaptation server request in order to ascertain whether the request was received from a mobile communicator. As described hereinabove, the extracted user-agent field identifies the mobile communicator which communicated the request 156. Therefore, the server 160 identifies the request as being received from the specific type of mobile communicator which communicated the request and which, in the illustrated example, is a BlackBerry® mobile communicator, even though the server 160 actually received the request from the classification and adaptation server 158.

As seen at stage D, the server 160 then provides the requested content. In the illustrated example of Fig. 1B, the server 160 does not have content which is suitable for display on a mobile communicator and thus supplies web content. Subsequently, the server 160 communicates the web content to classification and adaptation server 158 via a communications network such as the Internet. As seen at stage E, the provided web content may have associated therewith a URL, such as the initially requested URL www.nycelementaryschool.com.

As seen at stage F, and in accordance with a preferred embodiment of the present invention, when the web content is received by classification and adaptation server 158, the classification and adaptation server 158 classifies the received web content as being unsuitable for display on a mobile communicator. The classification and adaptation server 158 then adapts the web content to be suitable for display on the mobile communicator 152, using any suitable method, such as those described in Applicant's U.S. Patent Application No. 11/680,140 entitled METHOD AND APPARATUS FOR ANALYZING, PROCESSING AND FORMATTING NETWORK INFORMATION SUCH AS WEB-PAGES, filed October 30, 2007, which is hereby incorporated by reference.

Following classification and adaptation of the web content, the classification and adaptation server 158 communicates the adapted web content to the mobile communicator 152 via a communications network, for display on the mobile communicator 152, as seen at stage G.

It is appreciated that in accordance with an embodiment of the present invention, the user 150 may preset the mobile communicator 152 to provide a preferred page version or display mode, per session or per plurality of sessions. For example, the user may instruct the classification and adaptation server 158 not to use the user-agent in the user-agent field provided in the original request. The user may further instruct the server 158 to use a standard desktop browser user-agent, which would typically result in the receipt of web content which is unsuitable for display on the mobile communicator 152 and to adapt the received web content to be suitable for display on the mobile communicator 152.

The user may also preset the layout of the adapted web content by providing instructions to the server 158 via the mobile communicator 152. For example, the user may instruct the server 158 to maintain the layout of the original web content in the adapted web content, such that the adapted web content is only optimized for the size of the mobile communicator 152. Alternatively, the user may instruct the server 158 to adapt the web content to be fit and optimized for the specific mobile communicator 152.

Reference is now made to Figs. 2A and 2B, which are simplified illustrative drawings illustrating a system and method for classifying whether or not requested content is already suitable for display on a STB, and, if necessary, for adapting the content for display on the STB. In Fig. 2A the requested content is suitable for display on the STB and in Fig. 2B, the requested content is web content and is thus not suitable for display on the STB and requires adaptation for display on the STB, in accordance with a preferred embodiment of the present invention.

As seen in Fig. 2A, a user 200 operating a STB 202, enters a URL 204 such as www.bankofamerica.com in a browser of the STB 202, as seen at stage A.

As seen at stage B, when the user 200 presses a 'go' or an 'enter' button of the browser, the STB 202 communicates a request 206 for the content identified by URL 204 to a classification and adaptation server 208. The request 206 is typically communicated from STB 202 to the server 208 via a communications network such as the Internet. The request 206 typically includes an identification of the type of STB requesting the content, which identification is typically in a user-agent field of a request header.

As seen at stage C, when the classification and adaptation server 208 receives the content request 206, it ascertains the type of STB identified in the user-agent field of the request header. The classification and adaptation server 208 then generates an adaptation server request for the requested content. The user-agent field of the adaptation server request header lists the type of STB identified in the user-agent field of the original request header as ascertained by the classification and adaptation server 208.

Subsequently, the classification and adaptation server 208 communicates the adaptation server request via a communications network such as the Internet, to a server 210. In the illustrated example, the server hosting the requested content is associated with a bank 212.

As seen at stage D, following receipt of the adaptation server request by the server 210, the server 210 extracts the user-agent field from the header of the adaptation server request in order to ascertain whether the request was received from a STB. As described hereinabove, the extracted user-agent field identifies the STB which communicated the request 206. Therefore, the server 210 identifies the request as being received from a STB, even though server 210 actually received the request from the classification and adaptation server 208.

The server 210 then provides content which is already suitable for display on STBs and may also already be suitable for display on the specific requesting STB, if available.

If content in this format is not available, server 210 provides web content to the classification and adaptation server 208.

As seen at stage F, and in accordance with a preferred embodiment of the present invention, when the content is received by the classification and adaptation server 208, the classification and adaptation server 208 classifies the received content as being suitable for display on STBs. The server 208 may also ascertain whether the content requires adaptation in order to be suitable for display on the specific requesting STB 202. If such adaptation is necessary, the classification and adaptation server carries it out using any suitable method, such as those described in Applicant's U.S. Patent Application No. 11/680,140 entitled METHOD AND APPARATUS FOR ANALYZING, PROCESSING AND FORMATTING NETWORK INFORMATION SUCH AS WEB-PAGES, filed October 30, 2007, which is hereby incorporated by reference.

Following classification of the content as being suitable for display on STBs, and if necessary, following further adaptation thereof, the classification and adaptation server 208 communicates the content to the STB 202, via a communications network, for display on the STB 202, as seen at stage G.

It is appreciated that in accordance with an embodiment of the present invention, the user 200 may preset the STB 202 to provide a preferred page version or display mode per session or per plurality of sessions. For example, the user may instruct the classification and adaptation server 208 not to use the user-agent in the user-agent field provided in the original request. The user may further instruct the server 208 to use a standard user-agent, which would typically result in the receipt of web content unsuitable for display on the STB 202, and to adapt the received web content to be suitable for display on the STB 202.

The user may also preset the layout of the adapted web content by providing instructions to the server 208 via the STB 202. For example, the user may instruct the server 208 to maintain the layout of the original web content in the adapted web content, such that the adapted web content is only optimized for the size of the STB 202. Alternatively, the user may instruct the server 208 to adapt the web content to be fit and optimized for the specific STB 202.

Turning to Fig. 2B, it is seen that a user 250 operating a STB 252, enters a URL 254 such as www.nycelementaryschool.com in a browser of the STB 252, as seen at stage A.

As seen at stage B, when the user 250 presses a 'go' or an 'enter' button of the browser, the STB 252 communicates a request 256 for the content identified by URL 254, to a classification and adaptation server 258. The request 256 is typically communicated from the STB 252 to the server 258 via a communications network such as the Internet. The request 256 typically includes an identification of the type of the STB requesting the content, which identification is typically in a user-agent field of a request header.

As seen at stage C, when the classification and adaptation server 258 receives the request 256, it ascertains the type of STB identified in the user-agent field of the request header. The classification and adaptation server 258 then generates an adaptation server request for the requested content. The user-agent field of the adaptation server request header lists the type of STB identified in the user-agent field of the original request header as ascertained by the classification and adaptation server 258.

Subsequently, the classification and adaptation server 258 communicates the adaptation server request, via a communications network such as the Internet, to a server 260. In the illustrated example, the server 260 which hosts the requested content is associated with an elementary school 262.

Following receipt of the adaptation server request by the server 260, the server 260 extracts the user-agent field from the header of the adaptation server request in order to ascertain whether the request was received from a STB. As described hereinabove, the extracted user-agent field identifies the STB which communicated the request 256. Therefore, the server 260 identifies the request as being received from the specific type of STB which communicated the request even though the server 260 actually received the request from the classification and adaptation server 258.

As seen at stage D, the server 260 then provides the requested content. In the illustrated example of Fig. 2B, the content provided by the server 260 is web content and thus is not suitable for display on a STB. Subsequently, the server 260 communicates the web content to classification and adaptation server 258 via a communications network such as the Internet. As seen at stage E, the provided web content may have associated therewith a URL, such as the initially requested URL www.nycelementaryschool.com.

As seen at stage F, and in accordance with a preferred embodiment of the present invention, when the web content is received by classification and adaptation server 258, the classification and adaptation server 258 classifies the received web content as being unsuitable for display on a STB. The classification and adaptation server 258 then adapts the web content to be suitable for display on STB 252, using any suitable method, such as those described in Applicant's U.S. Patent Application No. 11/680,140 entitled METHOD AND APPARATUS FOR ANALYZING, PROCESSING AND FORMATTING NETWORK INFORMATION SUCH AS WEB-PAGES, filed October 30, 2007, which is hereby incorporated by reference.

Following classification and adaptation of the web content, the classification and adaptation server 258 communicates the adapted web content to the STB 252 via a communications network, for display on the STB 252, as seen at stage G.

It is appreciated that in accordance with an embodiment of the present invention, the user 250 may preset the STB 252 to provide a preferred page version or display mode, per session or per plurality of sessions. For example, the user may instruct the classification and adaptation server 258 not to use the user-agent in the user-agent field provided in the original request. The user may further instruct the server 258 to use a standard user-agent, which would typically result in the receipt of web content which is unsuitable for display on the STB 252 and to adapt the received web content to be suitable for display on the STB 252.

The user may also preset the layout of the adapted web content by providing instructions to the server 258 via the STB 252. For example, the user may instruct the server 258 to maintain the layout of the original web content in the adapted web content, such that the adapted web content is only optimized for the size of the STB 252. Alternatively, the user may instruct the server 258 to adapt the web content to be fit and optimized for the specific STB 252.

It is appreciated that although the above examples relate to mobile communicators and STBs, the present invention may be useful for site detection and handling for other non-desktop browsers.

Reference is now made to Fig. 3, which is a simplified block diagram illustrating apparatus, such as classification and adaptation server 108 of Fig. 1A, operative to classify whether content is suitable for display on a non-desktop browser and, if necessary, to adapt the content to be suitable for display on the non-desktop browser which has generated the request for the content.

It is appreciated that although the apparatus of Fig. 3 is described below in reference to its use with mobile communicators, it may be readily modified by one skilled in the art so as to render it operative for use with other non-desktop browsers, such as STBs.

As seen in Fig. 3, a classification and adaptation server 300 includes a request processing module 302, which is operative to receive from a user a request for content. The request received from the user typically identifies a type of mobile communicator operated by the user.

In response to receipt of the request for content, the request processing module 302 generates a corresponding adaptation server request for the content. The server hosting the requested content and the type of mobile communicator operated by the user, as identified in the request received from the user, are identified in the adaptation server request, as described hereinabove with reference to Figs. 1A and 1B. The request processing module 302 communicates the adaptation server request to a server 304 hosting the requested content.

Responsive to receipt of the adaptation server request, the server 304 communicates a response, including the requested content, to the classification and adaptation server 300. The response is received by a content classification module 306 forming part of the classification and adaptation server 300. The content classification module 306 then classifies whether or not the received content is already suitable for display on at least one mobile communicator, based on at least one characteristic of the content, as will be described in further detail hereinbelow with reference to Figs. 4A - 4D.

The results of the classification carried out by the content classification module 306, as well as the received content, are transmitted to a content adaptation module 308, forming part of the classification and adaptation server 300. If necessary, the content adaptation module 308 adapts the received content for display on the specific type of mobile communicator operated by the user. The received content may require such adaptation due to the received content being identified as web content, and thus unsuitable for display on mobile communicators. Alternatively, the received content, although suitable for display on mobile communicators, may require such adaptation for display on the specific type of mobile communicator operated by the user.

The content adaptation module 308 then proceeds to transmit the now suitable content to the mobile communicator operated by the user for display thereon. It is understood that if the received content is already suitable for display on the specific type of mobile communicator operated by the user, then no adaptation of the content need be carried out by the content adaptation module 308 prior to transmission of the content to the mobile communicator.

Reference is now made to Figs. 4A - 4D, which, taken together, form a simplified flowchart illustrating methodology for classifying whether or not content is already suitable for display on a mobile communicator, in accordance with a preferred embodiment of the present invention.

It is appreciated that the methodology of Figs. 4A - 4D may be readily modified by one skilled in the art to be made operative to classify whether or not content is already suitable for display on other non-desktop browsers, such as STBs.

Turning to Fig. 4A, a content classification server, such as server 108 of Fig. 1A, receives content from a server hosting the content, as seen at step 400. As will be described hereinbelow, various characteristics of the received content are checked in order to ascertain whether or not it is suitable for display on a mobile communicator.

As seen in step 402, the content classification server initially checks whether a URL associated with the received content, or a portion of such a URL, is present in a mobile communicator compatible list. The mobile communicator compatible list typically includes URLs which identify content which is to be treated as being suitable for display on a mobile communicator, regardless of the characteristics of the content. For example, such a list may include news or newspaper related URLs.

If the received content is associated with a URL present in the mobile communicator compatible list, such as, for example, www.cnn.com, the server treats the received content as being already suitable for display on a mobile communicator, as seen at step 404, and the classification process is complete.

If the URL associated with the received content is not present in any such mobile communicator compatible list, the content classification server continues to check whether the URL associated with the received content, or a portion of the URL, is present in a mobile communicator incompatible list. The mobile communicator incompatible list typically includes URLs which identify web content which is to be treated as being unsuitable for display on a mobile communicator, regardless of the characteristics of the web content, as seen at step 406. For example, such a mobile communicator incompatible list may include different peoples' home pages.

If the received content is associated with one of the URLs in the mobile communicator incompatible list, such as, for example, www.joeshomepage.com, the server treats the received content as web content and not suitable for display on a mobile communicator, as seen at step 408, and the classification process is complete.

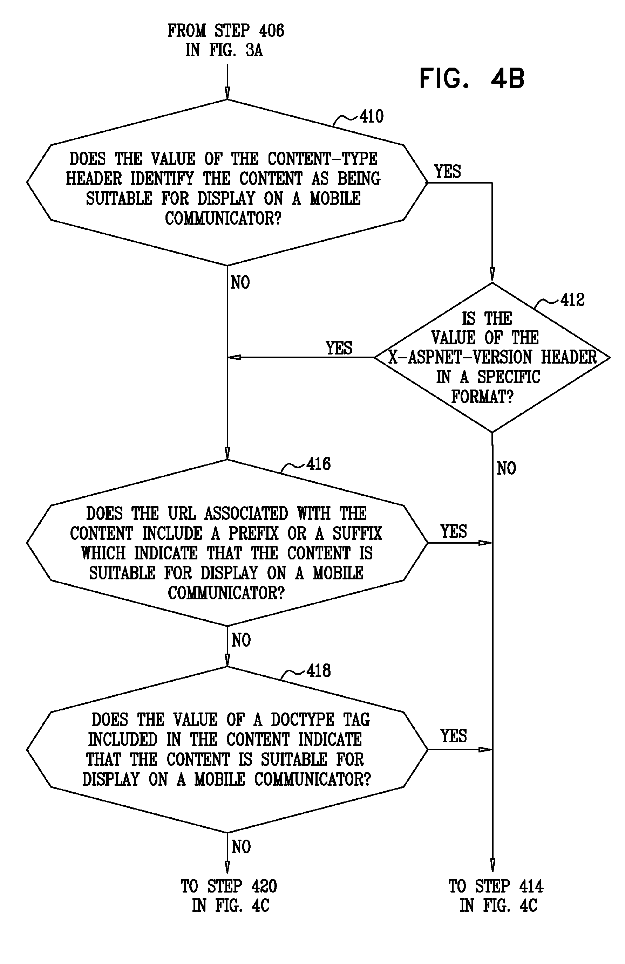

Turning to Fig. 4B, if the URL associated with the received content is not found in the mobile communicator incompatible list, the server proceeds to test whether a value of a content-type header of the received content identifies the received content as being suitable for display on a mobile communicator, as seen at step 410. For example, the following values of the content type header would identify the received content as being suitable for display on a mobile communicator:
"application/xhtml+xml";
"application/vnd.wap.xhtml+xml"; and
"text/vnd.wap.wml".
It is appreciated that an operator of the server may define other values to identify the received content as being suitable for display on a mobile communicator.

If the value of the content-type header of the received content identifies it as being suitable for display on a mobile communicator, the server checks whether a value of a X-AspNet-Version header of the received content is of the format (.*)2(.*), as seen at step 412.

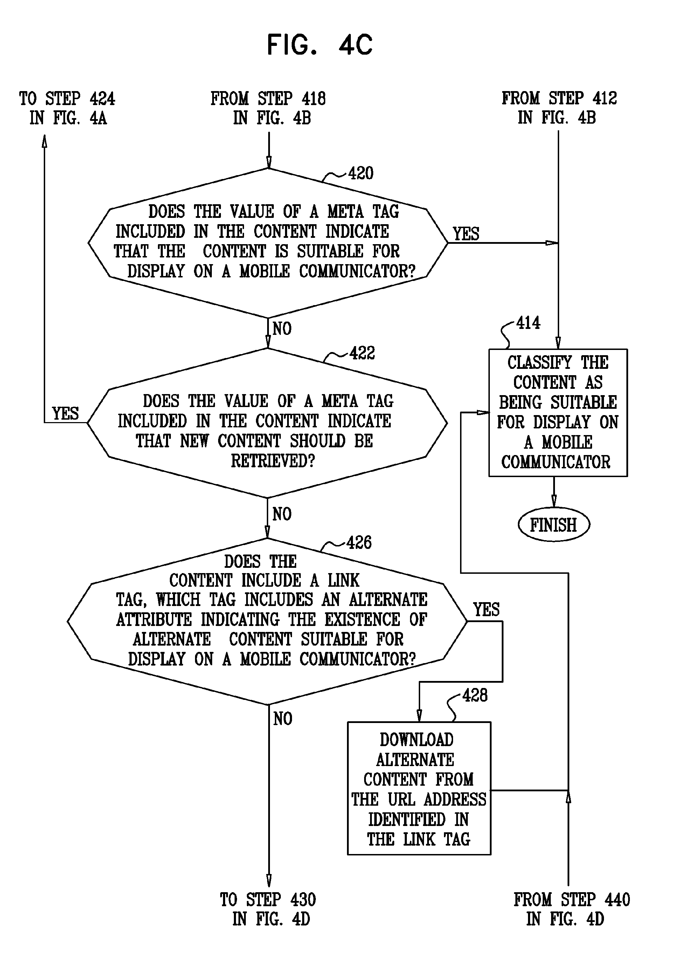

If the value of the X-AspNet-Version header is not of the specified format, the server classifies the received content as being suitable for display on a mobile communicator and the classification process is complete, as seen at step 414 in Fig. 4C.

If the value of the X-AspNet-Version header is of the specified format, the server identifies the received content to be of a ".net 2.X" version. The server then preferably disregards the results of content-type header test described in step 410 and the classification process proceeds as will be described hereinbelow. Additionally, if the content-type header does not classify the received content as being suitable for display on a mobile communicator, the classification process proceeds as will be described hereinbelow.

As seen at step 416, if the received content belongs to the ".net 2.x" version, or if it was not classified as being suitable for display on a mobile communicator, the server checks whether the URL associated with the received content includes a portion which indicates that the received content is suitable for display on a mobile communicator. For example, a URL ending with the suffix ".mobi" and/or a URL beginning with the prefix "wap." indicate that the received content associated with the URL is suitable for display on a mobile communicator.

If the URL indicates that the received content is suitable for display on a mobile communicator, the server classifies the received content as being suitable for display on a mobile communicator, as seen at step 414 in Fig. 4C, and the classification process is complete.

If the URL does not indicate that the received content is suitable for display on a mobile communicator, the server proceeds to carry out several content characteristic tests. Initially, the server retrieves a document type value identified in a doctype tag of the received content. The server then ascertains whether this value indicates that the received content is suitable for display on a mobile communicator, as seen at step 418. For example, the doctype value "DTD/xhtml-mobile10.dtd" is indicative of received content which is suitable for display on a mobile communicator.

It is appreciated that the doctype value may indicate that the received content is likely to be suitable for display on a mobile communicator. One example of such a doctype value is "xhtmll-strict.dtd". However, with respect to the classification of the received content by the server, such a doctype value is disregarded and the server proceeds as if the doctype value gave no indication as to the likelihood of the received content being suitable for display on a mobile communicator.

If the doctype value indicates that the received content is suitable for display on a mobile communicator, the server classifies the received content as being suitable for display on a mobile communicator, as seen at step 414 in Fig. 4C, and the classification process is complete.

Turning to Fig. 4C, it is seen that if the doctype value does not indicate that the received content is suitable for display on a mobile communicator, the server proceeds to check whether a value of a meta tag included in the received content indicates that the content is suitable for display on a mobile communicator, as seen at step 420. For example, tags of the form "<meta name="viewport"... >" or "<meta name="MobileOptimized" ...>" indicate that the received content is suitable for display on a mobile communicator.

If the meta tag value indicates that the received content is suitable for display on a mobile communicator, the server classifies the received content as being suitable for display on a mobile communicator, as seen at step 414, and the classification process is complete.

If the meta tag value does not indicate that the received content is suitable for display on a mobile communicator, the server ascertains whether the meta tag value indicates that content identified by a different URL should be retrieved to replace the currently processed received content, as seen at step 422. For example, a tag of the form "<meta http-equiv="refresh" content ="www.abe.com" ...>" indicates that the server should retrieve the content identified by the URL www.abc.com.

If the meta tag indicates that content identified by the different URL should be retrieved, the server retrieves that content, as seen at step 424. The server then classifies whether or not the new content is suitable for display on a mobile communicator, in accordance with the process described hereinabove with reference to steps 402-420.

If the meta tag value does not indicate that content identified with a different URL should be retrieved, the server proceeds to check whether the received content includes a link tag, which link tag indicates the existence of alternate content, as seen at step 426. The alternate content is typically already suitable for display on a mobile communicator. Such a tag typically includes a type attribute having the value "alternate" associated therewith and a media attribute having the value "handheld" associated therewith, and has a format similar to "<link type="alternate" media="handheld" href="www.suitableforhandheld.com"...>".

If such a link tag exists in the received content, the server downloads alternate content from an address identified by a URL in the link tag, as seen at step 428. This new content is equivalent to the previously processed received content but is suitable for display on a mobile communicator. The server classifies the new content, which replaces the previously processed received content, as being suitable for display on a mobile communicator, as seen at step 414, and the classification process is complete.

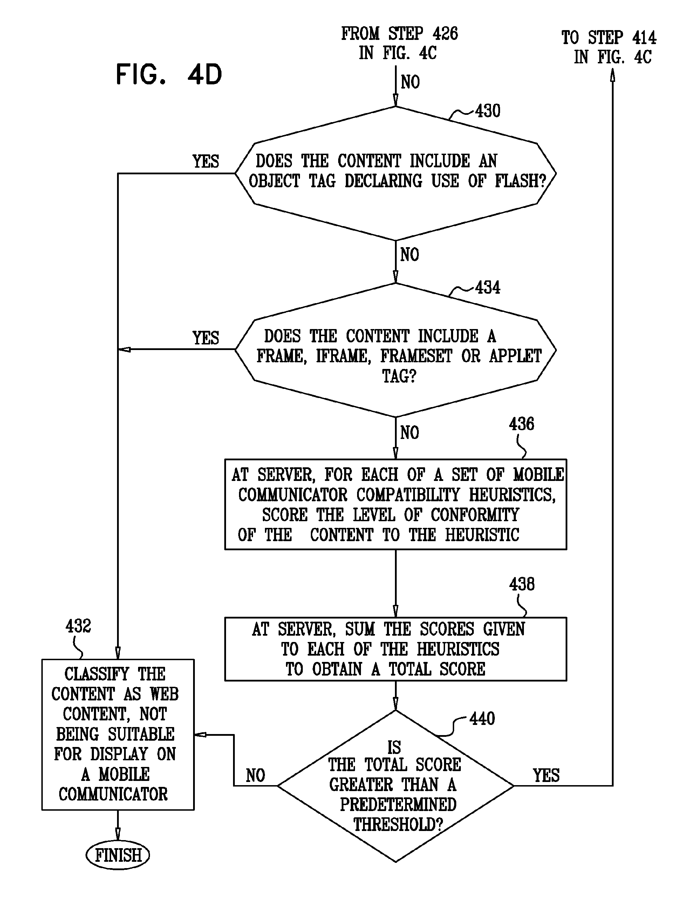

Turning to Fig. 4D, if no link tag defining alternate content is included in the received content, the server proceeds to check whether the received content includes an object tag declaring use of "flash" aspects, as seen at step 430.

If the content includes such an object tag, this indicates that flash is used in the received content, which indicates that the received content is web content and is unsuitable for display on a mobile communicator. Therefore, the server classfies the received web content as being unsuitable for display on a mobile communicator, as seen at step 432, and the classification process is complete.

If the received content does not include such an object tag, the server proceeds to check whether the received content includes any of a frame tag, an iframe tag, a frameset tag and an applet tag, as seen at step 434.

If the received content includes one or more of the tags listed above, this indicates that the formatting of the received content is unsuitable for display on a mobile communicator, since mobile communicators typically do not support frames or applets. Therefore, the server classifies the received content as being web content and thus unsuitable for display on a mobile communicator, as seen at step 432, and the classification process is complete.

If the received content does not include any of the tags indicating the existence of a frame or applet therein, the server uses several mobile communicator compatibility heuristics in order to ascertain whether or not the received content is suitable for display on a mobile communicator. Suitable heuristics include:

page size limit - content suitable for display on a mobile communicator has a stricter page size limit than web content unsuitable for display on a mobile communicator;

image size limit - images in content already suitable for display on a mobile communicator are limited in size so as to be supported by the screen and memory size of mobile communicators;

availability of access keys - access keys are typical of content already suitable for display on mobile communicators; and

existence of nested tables - nested tables are typically not supported by mobile communicators.

As seen at step 436, for each such heuristic, the server scores the level of conformity of the received content to the heuristic as required for display of the received content on a mobile communicator. Preferably, a higher score is given to higher, or better, conformity with the heuristic, and a lower score is given to lesser, or worse, conformity with the heuristic. The scores given to each of the heuristics are then summed, as seen at step 438, and the resulting, total score is compared to a predetermined threshold, as seen at step 440. If the total score is greater than the predetermined threshold, the received content is classified as being suitable for display on a mobile communicator, as seen at step 414, and the classification is complete. Otherwise, if the total score is lesser than the predetermined threshold, the received content is classified as being web content and unsuitable for display on a mobile communicator, as seen at step 432, and the classification process is complete.

It is appreciated that the classification process is not limited to the characteristics described hereinabove. Specifically, the operator of the classification server may define additional or alternate characteristics to be tested in order to classify whether or not the received content is suitable for display on a mobile communicator.

It will be appreciated by persons skilled in the art that the present invention is not limited to what has been particularly shown and described hereinabove. Rather the scope of the present invention includes both combinations and subcombinations of various features described hereinabove as well as modifications of such features which would occur to a person of ordinary skill in the art upon reading the foregoing description and which are not in the prior art.

## Claims

1. Apparatus for providing content to a user comprising:
a request processing module operative to receive a request for content, from a user operating a mobile communicator, and to communicate said request to a server hosting said content;
a content classification module, operative to receive said content from said server hosting said content and to ascertain whether or not said content is already suitable for display on a mobile communicator based on at least one characteristic of said content; and
a content adaptation module, operative to receive a classification output from said content classification module and to adapt said content which is not already suitable for display on said mobile communicator to be suitable for display on said mobile communicator.

2. Apparatus for providing content to a user comprising:
a request processing module operative to receive a request for content, from a user operating a non-desktop browser, and to communicate said request to a server hosting said content;
a content classification module, operative to receive said content from said server hosting said content and to ascertain whether or not said content is already suitable for display on a non-desktop browser based on at least one characteristic of said content; and
a content adaptation module, operative to receive a classification output from said content classification module and to adapt said content which is not already suitable for display on said non-desktop browser to be suitable for display on said non-desktop browser.

3. Apparatus for providing content according to claim 1 or claim 2 and wherein said at least one characteristic comprises at least one of:
a value associated with a content-type header included in said content;
a format of a value associated with an x-AspNet-Version header included in said content;
at least a portion of a URL associated with said content;
a doctype value identified in said content;
a value associated with an alternate attribute of a link tag included in said content;
a value associated with an attribute of a meta tag included in said content;
a declaration of use of flash in an object tag included in said content;
at least one of a frame tag, an iframe tag, a frameset tag and an applet tag included in said content;
a page size limit associated with said content;
an image size limit associated with said content;
availability of access keys in said content; and
existence of nested tables in said content.

4. Apparatus for providing content according to either of claims 1 & 3 and wherein said at least one characteristic comprises multiple characteristics, and wherein said content classification module is operative to classify whether or not said content is already suitable for display on at least one mobile communicator by:
scoring the compliancy of said content with each of said multiple characteristics to obtain multiple characteristic scores;
summing said multiple characteristic scores to obtain a sum score; and
if said sum score is greater than a predetermined threshold value, classifying said content as being adapted for display on at least one mobile communicator.

5. Apparatus for providing content according to either of claims 1 & 3 and wherein said content classification module is operative to classify whether or not said content is already suitable for display based on the presence of a URL associated with said content in at least one of a mobile communicator compatible URL list and a mobile communicator incompatible URL list.

6. Apparatus for providing content according to any of claims 1 - 5 and wherein said request processing module is operative to generate a second request and to communicate said second request to said server hosting said content.

7. Apparatus for providing content according to any of claims 1 - 6 and wherein said formatting inputs comprise instructions for adapting said content to fit at least one characteristic of a device operated by said user.

8. Apparatus for providing content according to any of the preceding claims and wherein said formatting inputs comprise instructions for maintaining a layout of said content.

9. A method for providing content to a user, the method comprising:
receiving a request for content from a user operating a mobile communicator;
communicating said request to a server hosting said content;
in response to said request, receiving said content from said server hosting said content;
classifying whether or not said content is already suitable for display on at least one mobile communicator based on at least one characteristic of said content;
adapting said content which is not already suitable for display on said mobile communicator operated by said user, based on a result of said classifying; and
communicating said content which is already suitable for display on said mobile communicator or the adapted content to said mobile communicator.

10. A method for providing content to a user, the method comprising:
receiving a request for content from a user operating a non-desktop browser;
communicating said request to a server hosting said content;
in response to said request, receiving said content from said server hosting said content;
classifying whether or not said content is already suitable for display on at least one non-desktop browser based on at least one characteristic of said content;
adapting said content which is not already suitable for display on said non-desktop browser operated by said user, based on a result of said classifying; and
communicating said content which is already suitable for display on said non-desktop browser or the adapted content to said non-desktop browser.

11. A method according to claim 9 or claim 10 and wherein said at least one characteristic comprises at least one of:
a value associated with a content-type header included in said content;
a format of a value associated with an x-AspNet-Version header included in said content;
at least a portion of a URL associated with said content;
a doctype value identified in said content;
a value associated with an alternate attribute of a link tag included in said content;
a value associated with an attribute of a meta tag included in said content;
a declaration of use of flash in an object tag included in said content;
at least one of a frame tag, an iframe tag, a frameset tag and an applet tag included in said content;
a page size limit associated with said content;
an image size limit associated with said content;
availability of access keys in said content; and
existence of nested tables in said content.

12. A method according to any of claims 9 - 11 and also comprising employing operator inputs to define said at least one characteristic.

13. A method according to any of claims 9, 11 and 12 and wherein said at least one characteristic comprises multiple characteristics, and wherein classifying comprises:
scoring the compliancy of said content with each of said multiple characteristics to obtain multiple characteristic scores;
summing said multiple characteristic scores to obtain a sum score; and
if said sum score is greater than a predetermined threshold value, classifying said content as being already suitable for display on at least one mobile communicator.

14. A method according to any of claims 9 and 11 - 13 and also comprising classifying whether or not said content is already suitable for display on at least one mobile communicator based on the presence of a URL associated with said content in at least one of a mobile communicator compatible URL list and a mobile communicator incompatible URL list.

15. A method according to any of claims 9 and 11 - 14 and also comprising, prior to said communicating said request, generating a second request, which second request includes identification of said mobile communicator in a user-agent header of said second request, and wherein said communicating said request comprises communicating said second request to said server hosting said content.

16. A method according to any of claims 9 and 11 - 14 and also comprising, prior to said communicating said request and responsive to input provided by said user, generating a second request, which second request does not include identification of said mobile communicator in a user-agent header of said second request, and wherein said communicating said request comprises communicating said second request to said server hosting said content.

17. A method according to any of claims 9, 11 - 14, 15 and 16 and wherein said adapting comprises adapting said content for display on said mobile communicator in accordance with formatting inputs provided by said user, using said mobile communicator.
